Europäisches Patentamt

European Patent Office

Office européen des brevets

(19)

(11) Veröffentlichungsnummer: **0 240 030**

**A2**

## (12) EUROPÄISCHE PATENTANMELDUNG

(21) Anmeldenummer: **87104978.9**

(22) Anmeldetag: **03.04.87**

(51) Int. Cl.⁴: **B03B 5/00**

(30) Priorität: **04.04.86 DE 3611235**

(43) Veröffentlichungstag der Anmeldung:
**07.10.87 Patentblatt 87/41**

(84) Benannte Vertragsstaaten:
**AT BE CH DE ES FR GB GR IT LI LU NL SE**

(71) Anmelder: **Böhringer, Paul
Heuchlingerstrasse 32
D-7101 Oedheim(DE)**

(72) Erfinder: **Böhringer, Paul
Heuchlingerstrasse 32
D-7101 Oedheim(DE)**

(74) Vertreter: **Patentanwälte Leinweber &
Zimmermann
Rosental 7/II Aufg.
D-8000 München 2(DE)**

(54) **Entwässerungsmaschine.**

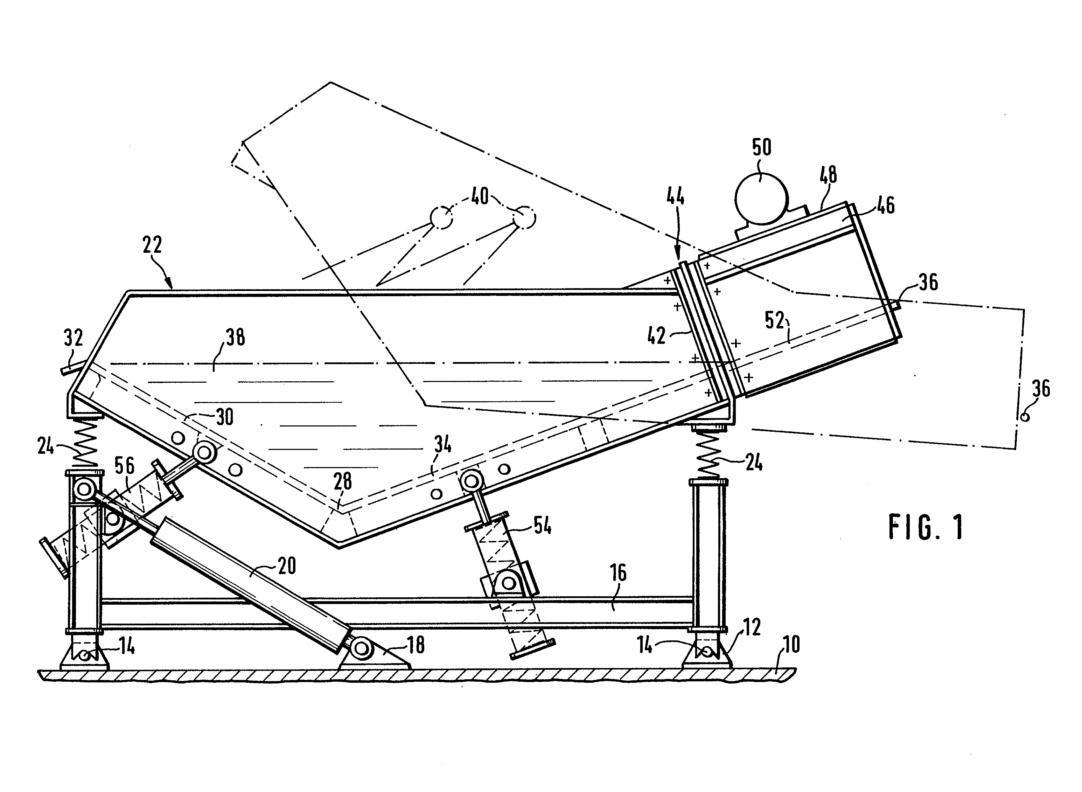

(57) Für die Reinigung und Entwässerung von Feststoff-Wassergemischen bei der Vorbereitung von Baumaterialien und insbesondere bei Recycling-Prozessen wird eine robuste Waschmuldenkonstruktion aus einem Stahlblech-Waschkasten vorgeschlagen, an den austragsseitig zur verbesserten Entwässerung ein ebenfalls massiver Vibrationskasten angeschlossen wird, während am Waschkasten selbst mindestens ein Waschpulsator und mindestens ein Förderpulsator in der Gestalt von Hydraulik-oder Pneumatikaggregaten angreifen. Überdies kann die gesamte Einrichtung mit Hilfe eines hydraulischen oder pneumatischen Huborgans um eine Schwenkachse in Austragrichtung hochgeschwenkt, gegebenenfalls zusätzlich oder alternativ auch in Richtung des Waschwasserüberlaufs hochgeschwenkt werden (Fig. 1).

FIG. 1

EP 0 240 030 A2

## Entwässerungsmaschine

Die Erfindung betrifft eine Vorrichtung zum Reinigen, Austragen und Entwässern von Schwemmaterial aus verunreinigten Feststoff-Wassergemischen mit einer Waschmulde, über der Waschflüssigkeitsbrausen angebracht sind, wobei die Waschmulde bis zu einem an ihrem einen Ende vorgesehenen Überlauf mit Waschflüssigkeit gefüllt ist und an ihrem anderen Ende eine über den Waschflüssigkeitsspiegel hochgezogene Transportbahn aufweist, die zur Entwässerung der ausgetragenen Feststoffe mit einer Vibrationseinrichtung versehen ist.

Eine bekannte Vorrichtung dieser Art besteht aus einem Maschinengestell, zwischen dessen Seitenwänden über Stütz-, Spann-und Transportrollen ein Förderband gespannt ist. Das obere Trum des Förderbandes bildet eine Waschmulde, die mit Waschflüssigkeit gefüllt ist. Dieser Waschmulde wird auf bekannte Weise über eine Schurre das zu reinigende Material aufgegeben. Bei diesem wird es sich häufig um gebaggerten oder aufbereiteten Kies handeln. Es kann sich aber auch um andere Materialien, beispielsweise in Recycling-Prozessen handeln.

Die bekannte Vorrichtung (Deutsche Patentschrift 31 48 728) ist mit einem Vibrationsverdichter versehen. Dieser ist im Bereich unterhalb der Schurre im hier verlaufenden über dem Waschflüssigkeitsspiegel der Waschmulde liegenden Teil des oberen Trums des Förderbandes und somit außerhalb der Waschmulde angeordnet. Der auf dem Vibrationsverdichter aufliegende Abschnitt des Förderbandes stimmt in seinem Neigungswinkel mit den Wänden der Waschmulde nicht überein. Der Hier angeordnete Vibrationsverdichter führt dazu, daß beim Austrag von Sand o. dgl. auf dem Förderband aus der Waschmulde entgegen der Abschwemmrichtung der Verunreinigungen am Überlauf im Sand noch mitgeführte Waschflüssigkeit herausgerüttelt wird und in die Waschmulde zurückfließt. Das entwässerte ausgetragene Feststoffmaterial kann nach dem Abwurf vom Transportband so unmittelbar abtransportiert oder weiterverarbeitet werden.

Die bekannte Vorrichtung erbringt mit mäßigem Energieaufwand gute Arbeitsergebnisse,sie hat jedoch auch Nachteile. So ist das ständig bewegte Förderband einen natürlichen Verschleiß unterworfen und muß immer wieder einmal ausgetauscht werden, was zu Stillstandzeiten der Einrichtung führt. Auch sind, beispielsweise bei Reckung des Förderbandes Nachjustierungen an den einzelnen Stützrollen notwendig, was eine weitere Erhöhung des Wartungsaufwandes darstellt. Schließlich sind Kräfteeinleitungen zur Intensivierung des Reinigungsvorganges in der Waschmulde ebensowenig vorgesehen, wie eine Möglichkeit zum Kippen der gesamten Einrichtung für den Fall einer gewünschten Unterstützung des Austrags des gereinigten Feststoffes oder zur raschen Entleerung der Waschmulde dann, wenn über die Schurre für die Reinigung in der Vorrichtung ungeeignetes Material aufgegeben wurde, was beim Recycling vorkommen kann.

Aufgabe der Erfindung ist es deshalb, eine derartige Vorrichtung vorzuschlagen, die die gleichen Wirkungen mit einer robusten und einfachen Konstruktion erbringt, Nachjustierungen überflüssig macht, das Einleiten zusätzlicher Kräfte ermöglicht und auch für die Verarbeitung von Recycling-Material geeignet ist.

Die Lösung dieser Aufgabe ist in den Ansprüchen gekennzeichnet.

Man erkennt, daß hier die Waschmulde als oben offener Waschkasten aus Stahlblech ausgebildet ist. Dieser Konstruktion ist auch die Vibrationseinrichtung angepaßt, die aus einem Vibrationskasten besteht. Da beide Teile massiv ausgebildet sind, kann der Vibrationskasten nur dann unabhängig von der Waschmulde die Entwässerungs-Schwingungen ausführen, wenn er mit dieser über eine elastische, dichtende Halterung verbunden ist. Der Boden des Vibrationskastens fluchtet mit dem der Waschmulde um eine durchgehende Entwässerungs-Transportbahn zum Austragsende der Vorrichtung hin zu erhalten. Die Vibrationseinrichtung kann auf einem Waschkasten oben aufgebracht werden, so daß die Vibrationseinrichtung gut zugänglich ist, von am Austragsende abfallenden entwässerten Feststoffen nicht in Mitleidenschaft gezogen wird und überdies auch für ein Hochschwenken der Anordnung unabhängig von den unter dieser angebrachten Rutschen o.dgl. nicht im Wege ist.

Der Vibrationskasten weist in Austragrichtung gesehen zweckmäßig einen rechteckigen Querschnitt auf. Dies gibt eine stabile, der Form des oben offenen Waschkastens gut angepaßte Konstruktion, bei der der Boden mit dem Boden der Waschmulde, die Seitenwände mit den Seitenwänden der Waschmulde fluchten können. Als Vibrationseinrichtung kann auf dem Vibrationskasten jeder geeignete Schwinger, ein Unwuchtantrieb o. dgl. aufgesetzt werden. Besonders geeignet ist dann, wenn auch die übrigen Steuerungen der Vorrichtung hydraulisch erfolgen, (siehe unten) ein Hydromotor.

Der aus Stahlblech gefertigte Waschkasten ist so ausgebildet, daß der Waschmuldenboden aus zwei in einem Winkel zueinander gestellten Teilböden gebildet wird. Der Scheitel bildet den tiefsten Punkt der Waschmulde. Der Öffnungswinkel der Waschmulde soll mindestens 120°, vorzugsweise 130° und mehr betragen.

Dabei ist es günstig, wenn die Teilböden in der normalen Arbeitsstellung der Waschmulde unterschiedlich steil angestellt sind. Dabei soll der an den Überlauf anschließende erste Bodenabschnitt steiler stehen. Dadurch wird ein Austrag der Feststoffe über diese Wand vermieden, die wegen der Steile der Wand immer wieder in die Waschmulde zurücksinken werden, so daß am Überlauf nur Waschwasser und Schwemmstoffe mit den Verunreinigungen ausgetragen werden. Im Gegensatz dazu wird der andere Teilboden, der sich vom tiefsten Punkt der Waschmulde zum Feststoffaustrag, also zum Vibrationskasten hin erstreckt, bewußt weniger steil angestellt, so daß die sich hier bildende Materialschicht unter der Vibrationswirkung allmählich aus der Waschflüssigkeit ausgetragen, im Vibrationskasten weiter entwässert und - schließlich fertig für Transport oder weitere Verarbeitung abgeworfen werden kann. Der Winkel des steiler angestellten Teilbodens zur Horizontalen kann 30°, der Winkel des flacher zum Vibrationskasten hinauf verlaufenden Teilbodens 10-20° betragen.

Die oberhalb des Waschflüssigkeitsspiegels angeordnete Bebrausung wird zweckmäßig so gerichtet, daß ihre Strahlrichtung zum Waschwasserüberlauf gerichtet ist. Die Bebrausung der Wasseroberfläche erzeugt damit eine der Austragrichtung entgegengesetzte Strömung, die durch die im Bad erzeugte Wasserbewegung unterstützt wird. Die Abführung der unerwünschten Bestandteile mit der Waschflüssigkeit über den Überlauf kann durch die mittels der Bebrausung zugeführte Waschflüssigkeitsmenge beeinflußt werden.

Die Wirkung der Bebrausung läßt sich noch unterstützen, wenn dem Waschwasser in der Mulde bzw. den eingebrachten zu reinigenden Feststoffen entsprechende Kräfte aufgegeben werden. Dafür wird zunächst der starre Waschkasten elastisch am Maschinengestell abgestützt und dann zwischen den Waschkasten und das Maschinengestell ein im wesentlichen das Waschwasser beeinflussender Waschpulsator bzw. mindestens ein im wesentlichen die Feststoffe beeinflussender Förderpulsator eingesetzt.

Besonders günstig ist es auch, wenn die Waschmulde gekippt werden kann. Eine Kippung in Austragrichtung ermöglicht es, nach dem Ablassen des Waschwassers die noch in der Waschmulde befindlichen Feststoffe bei Bedarf rasch zu entfernen. Eine ebenfalls mögliche Schwenkung in Gegenrichtung kann vor allem beim Einsatz der Vorrichtung in Recycling-Verfahren dazu verwendet werden, bei der Aufgabe für die Verarbeitung nicht geeigneter Materialien über die Schurre die gesamte Waschmulde in Überlaufrichtung zu entleeren, also dorthin, wo die Verunreinigungen jedenfalls abgeführt werden. Erst danach wird dann wieder die normale Feststoffreinigung aufgenommen. Stillstandzeiten der Vorrichtung können so auf ein Minimum reduziert werden.

Besonders zweckmäßig ist die Verwendung von Hydraulik-bzw. Pneumatikaggregaten für Waschpulsator, Förderpulsator und Hebeorgan für die Verschwenkbewegungen. Insbesondere können hier Kolben-Zylinder-Einrichtungen Verwendung finden. Bei diesen handelt es sich um robuste und preiswerte Organe, die dennoch auch während des Betriebes, programm-oder ferngesteuert Veränderungen ihrer Funktionskennwerte nach den jeweiligen Betriebsbedürfnissen ermöglichen.

Weitere Einzelheiten der Erfindung ergeben sich aus der folgenden Beschreibung der Figuren. Es zeigen:

Fig. 1 schematisch eine Seitenansicht der Vorrichtung, und

Fig. 2 eine von der linken Seite der Fig. 1 her gesehene Endansicht der gleichen Ausführungsform.

Auf einem Fundament 10 sind Böcke 12 befestigt, die mit seitlichen Stummelansätzen (Fig. 1) Schwenkachsen 14 definieren. Auf den Schwenkachsen 14 ruht ein Maschinengestell 16 über nach unten offene Gabeln auf.

In Längsrichtung der Vorrichtung zwischen den Böcken 12, jedoch in Fig. 1 von der Mitte zwischen beiden etwas nach links versetzt, sind beidseits der Vorrichtung auf dem Fundament 10 weitere Böcke 18 befestigt. In einem Auge des Bockes 18 ist jeweils schwenkbar ein Ende eines Huborgans 20 angelenkt, das als hydraulische Winde in Form einer Kolben-Zylinder-Einrichtung ausgebildet ist. Der Zylinder ist dabei einendig mit dem Bock 18, das freie Ende der Kolbenstange anderendig gelenkig mit dem Maschinengestell 16 verbunden.

Fig. 1 zeigt hierzu eine Einrichtung, die unter Abhebung des Maschinengestells 16 von der in Fig. 1 linken Schwenkachse 14 um die in Fig. 1 rechte Schwenkachse 14 aus den ausgezogenen Strichen gezeigten normalen Arbeitsstellung in die strichpunktiert gezeichnete Entleerstellung vorgeschwenkt werden kann, wenn die Kolbenstange des Huborgans 20 unter entsprechender Steuerung aus dem Zylinder ausgefahren wird. Selbstverständlich kann die Hubeinrichtung auch so ausgebildet werden, daß alternativ ein Hochschwenken um die in Fig. 1 linke Schwenkachse 14 oder wahlweise um die eine oder die andere der beiden Schwenkachsen 14 von Fig. 1 möglich ist.

Auf dem Maschinengestell 16 ist ein Waschkasten 22 über Federn 24 elastisch abgestützt getragen. Der Waschkasten 22 ist aus Stahlblech gefertigt und weist vertikale Seitenwände 26 und einen Waschmuldenboden auf, der aus zwei Teilböden besteht, die eine Waschmulde bilden.

Die Waschmulde weist so einen zu den Schwenkachsen 14 parallel, aber über diesen liegenden Scheitel 28 an ihrem tiefsten Punkt auf, von dem sich ein erster Bodenabschnitt 30 unter einem Winkel von 30° gegenüber der Horizontalen zum Waschflüssigkeits-Überlauf 32 hinauf erstreckt, während sich ein zweiter Bodenabschnitt 34 vom Scheitel 28 und einem Winkel von 20° gegenüber der Horizontalen zum Feststoff-Austrag 36 erstreckt. Entsprechend ist der Öffnungswinkel des Muldenbodens im Scheitel 28 150°.

Der Waschkasten 22 ist aus massivem Stahlblech gefertigt. Es ist jedoch für die Funktion der Einrichtung zweckmäßig, die Bodenabschnitte 30 und 34 mit Spezial böden zu versehen, die dem jeweiligen Zweck angepaßt die Funktion der Trennung von Verunreinigungen von den zu reinigenden Feststoffen und insbesondere den Austrag der Feststoffe über den zweiten Bodenabschnitt 34 aus der Vorrichtung unterstützen. Die Spezialböden werden entsprechend den zu verarbeitenden Feststoffen ausgewählt.

Die Seitenwände 26 des Waschkastens 22 sind über den durch den Überlauf 32 definierten Waschflüssigkeitsspiegel 38 hinauf nach oben gezogen. Der Waschkasten 22 ist aber oben offen. Hier sind über dem Waschflüssigkeitsspiegel 38 Brausen 40 angeordnet, die Waschflüssigkeit, vorzugsweise Waschwasser, von oben auf die Waschmulde sprühen. Die Sprührichtung ist dabei, wie in Fig. 1 schematisch angedeutet, in Richtung zum Überlauf 32 gerichtet, was das Abschwemmen der aus den Feststoffen herausgelösten Verunreinigungen aus der Waschmulde und die Trennung von der in Gegenrichtung ausgetragenen Feststoffen noch unterstützt.

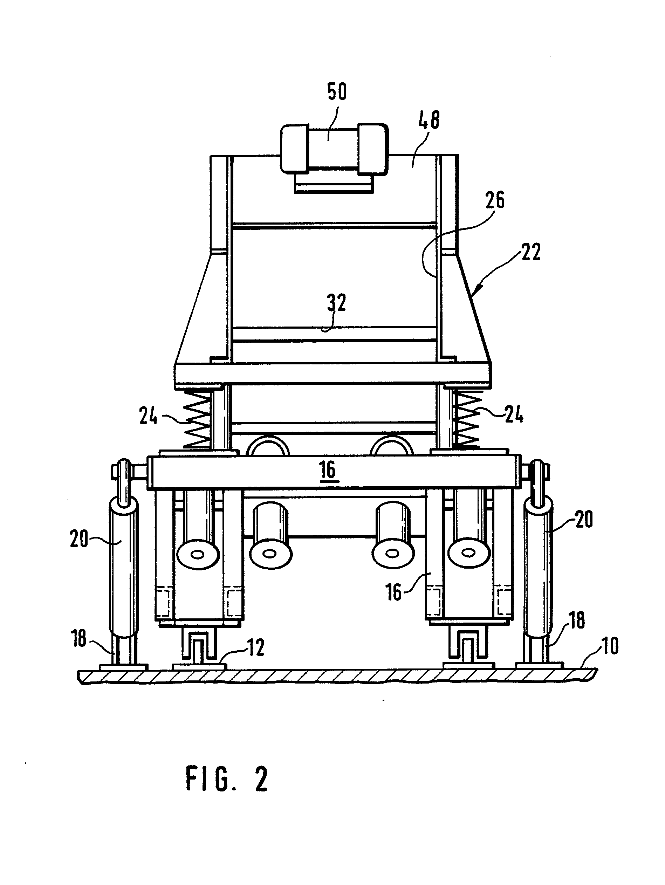

Dem verstellbaren Überlauf 32 gegenüber bildet der Waschkasten 22 ein Waschkastenmaul 42, das dadurch entsteht, daß der Waschkasten hier in einer zum zweiten Bodenabschnitt 34 vertikalen Ebene abgeschnitten wird. Hier ist an Flaschen des Waschkastens eine elastische dichtende Halterung 44 für einen Vibrationskasten 46 vorgesehen, der in seiner Form, wie den Fig. 1 und 2 entnommen werden kann, somit in Breite und Höhe dem Waschkasten 22 angepaßt ist. Der Vibrationskasten 46 ist aber im Gegensatz zum Waschkasten 22 oben geschlossen und trägt auf seiner Deckplatte 48 eine Vibrationseinrichtung 50 in Form eines Schwingers, eines Unwuchtantriebes oder auch eines Hydromotors. Der Vibrationskasten ist dabei, wie in Fig. 1 gut zu erkennen, so angeordnet, daß der Vibrationsboden 52 im Vibrationskasten 46 mit dem zweiten Bodenabschnitt 34 der Waschmulde fluchtet, wobei überdies der Waschflüssigkeitsspiegel gerade bis zum Stoß zwischen Vibrationsboden 52 und zweitem Bodenabschnitt 34 heranreicht. Durch die Vibrationseinrichtung wird bewirkt, daß die aus der Waschmulde über den zweiten Bodenabschnitt 34 nach rechts zum Austrag 36 transportierten Feststoffe während ihres Durchlaufs durch den Vibrationskasten 46 über den Vibrationsboden 52 zusätzlich entwässert werden, wobei das ihnen dabei entzogene Wasser einfach wieder in die Waschmulde zurückläuft.

Zwischen das Maschinengestell 16 und den zweiten Bodenabschnitt 34 ist überdies ein Waschpulsator 54 eingebaut, bei dem es sich ebenfalls um eine hydraulische Winde in Form einer Kolben-Zylinder-Einrichtung handelt. Der Zylinder ist in am Maschinengestell 16 vorgesehenen Augen schwenkbar befestigt. Während das äußere Ende der Kolbenstange unter den zweiten Bodenabschnitt am Waschkasten angelenkt ist. Die Wirkrichtung der Kolbenstange bzw. des Waschpulsators 54 ist dabei senkrecht zur Ebene des zweiten Bodenabschnitts 34. Wird nun dieser Bodenabschnitt durch den Waschpulsator 54 mit geringem Hub aber großer Hubzahl beaufschlagt, so wird das sich auf dem zweiten Bodenabschnitt 34 absetzende Gut immer wieder etwas hochgeworfen und damit noch intensiver gewaschen, sowie für die Förderbewegung in Bewegung gehalten.

Für das Erzeugen der Förderbewegung ist ein Förderpulsator 56 zwischen das Maschinengestell 16 und den ersten Bodenabschnitt 30 des Waschkastens 22 eingesetzt. Auch der Förderpulsator 56 ist wieder als hydraulische Winde in Gestalt einer Kolben-Zylinder-Einrichtung ausgebildet, wobei diesmal die Wirkrichtung der Kolbenstange im großen und ganzen zum Austrag 36 hin gerichtet ist, aber mit dem zweiten Bodenabschnitt 34 des Waschkastens 22 einen kleinen Winkel bildet, der folgende Aufgabe hat: Läßt man auch den Förderpulsator mit z.B. geringer Hubamplitude und z.B. größerer Hubzahl auf den auf den eingelegten Spezialboden im Waschkasten 22 arbeiten, so wird hierdurch ein Fördereffekt in Richtung zum Austrag 36 erzielt. Da aber der Förderpulsator 56 nicht völlig parallel zum Bodenabschnitt 34 liegt, sondern etwas steiler als dieser angestellt ist, bewirkt sein Hub eine Art Wurfbewegung der auf dem zweitenBodenabschnitt 34 abgesunkenen oder aufliegenden Feststoffe, die dadurch sowohl vom Boden abgehoben, wie in Richtung des Austrags 36 bewegt werden. Auch ohne den die Reinigung intensivierenden Waschpulsator 54 wird also durch den Förderpulsator 56 die Austragbewegung in Richtung zum Austrag 36 unterstützt. Selbstverständlich ist die elastische Halterung 44 dabei so ausgelegt, daß die Vibrationseinrichtung 50 den Vibrationskasten 46 unabhängig von den Schwingungen bewegen kann, die der Förderpulsator 56 (und gegebenenfalls der Waschpulsator 54) dem Waschkasten 22 übermitteln.

Das Huborgan 20, der Waschpulsator 54 und der Förderpulsator 56 können als Hydraulik-oder Pneumatikorgane alle fern-oder sogar programmgesteuert entsprechend den Erfordernissen des zu verarbeitenden Materials betätigt werden. Die optimale Waschintensität bzw. Wasch-und Förderleistung lassen sich dadurch erreichen, daß die Hubhöhe und die Hubzahl unabhängig voneinander einstellbar sind. Dies erfolgt ohne vorübergehenden Stillstand der Einrichtung während des Betriebs. Die Kippbarkeit der gesamten Einrichtung in die strichpunktierte Stellung, bei der der Austrag 36 den tiefsten Punkt darstellt, oder in die Gegenstellung, bei der der Überlauf 32 zum tiefsten Punkt wird, stellt eine zusätzliche Erweiterung der Beeinschlussungsmöglichkeiten dar. Selbstverständlich ist die Aufgabe-Schurre so angeordnet, daß diese Schwenkbewegungen durch sie nicht behindert werden.

Bezugszeichenliste

10 Fundament
12 Böcke
14 Schwenkachsen
16 Maschinengestell
18 Böcke
20 Huborgan
22 Waschkasten
24 Federn
26 Seitenwände
28 Scheitel
30 Bodenabschnitt (1.)
32 Überlauf
34 Bodenabschnitt (2.)
36 Austrag
38 Waschflüssigkeitsspiegel
40 Brausen
42 Waschkastenmaul
44 Halterung
46 Vibrationskasten
48 Deckplatte
50 Vibrationseinrichtung
52 Vibrationsboden
54 Waschpulsator
56 Förderpulsator

## Ansprüche

1. Vorrichtung zum Reinigen, Austragen und Entwässern von Schwemmaterial aus verunreinigten Feststoff-Wassergemischen mit einer Waschmulde, über der Waschflüssigkeitsbrausen angebracht sind, wobei die Waschmulde bis zu einem an ihrem einen Ende vorgesehenen Überlauf mit Waschflüssigkeit gefüllt ist und an ihrem anderen Ende eine über den Waschflüssigkeitsspiegel hochgezogene Transportbahn aufweist, die zur Entwässerung der ausgetragenen Feststoffe mit einer Vibrationseinrichtung versehen ist, dadurch gekennzeichnet, daß die Waschmulde als oben offener Waschkasten (22) aus Blech ausgebildet ist, der an den Muldenboden (30,34) anschließende vertikale Seitenwände (26) aufweist, daß die Entwässerungs-Transportbahn aus einem Vibrationskasten (46) besteht, der über eine elastische Halterung (44) am Waschkasten (22) befestigt ist, daß der Vibrationsboden (52) des Vibrationskastens (46) mit dem anschließenden Bodenabschnitt (34) des Waschkastens (22) fluchtet, und daß der Vibrationskasten (46) oben mit einer Vibrationseinrichtung (50) versehen ist.

2. Vorrichtung nach Anspruch 1, dadurch gekennzeichnet, daß der Vibrationskasten (46) im Querschnitt rechteckig ist.

3. Vorrichtung nach Anspruch 1 oder 2, dadurch gekennzeichnet, daß die Vibrationseinrichtung (50) des Vibrationskastens (46) ein Hydromotor ist.

4. Vorrichtung nach einem der Ansprüche 1 bis 3, dadurch gekennzeichnet, daß der Waschmuldenboden in seinem Scheitel (28, tiefster Punkt) einen Öffnungswinkel von mindestens 120° aufweist und in zwei Teilböden zerfällt, von denen in der normalen Arbeitsstellung der Waschmulde der zwischen Scheitel (28) und Überlauf (32) liegende erste Bodenabschnitt (30) steiler angestellt ist als der vom Scheitel (28) zum Vibrationsboden (52) des Vibrationskastens (46) verlaufende zweite Bodenabschnitt (34).

5. Vorrichtung nach Anspruch 4, dadurch gekennzeichnet, daß der erste Bodenabschnitt (30) mit der Horizontalen einen Winkel von 30°, der zweite Bodenabschnitt (34) einen solchen von 10-20° bildet.

6. Vorrichtung nach einem der Ansprüche 1 bis 5, dadurch gekennzeichnet, daß die Sprührichtung der über dem Waschflüssigkeitsspiegel (38) angeordneten Brausen (40) zum Überlauf (32) hin und damit entgegen der Austragrichtung gerichtet ist.

7. Vorrichtung nach einem der Ansprüche 1 bis 6, dadurch gekennzeichnet, daß die Waschmulde zumindest einendig um eine quer zur Förderrichtung unter dem Waschmuldenboden angeordnete Schwenkachse (14) durch ein Huborgan (20) hochschwenkbar ausgebildet ist.

8. Vorrichtung nach einem der Ansprüche 1 bis 7, dadurch gekennzeichnet, daß der Waschkasten (22) am Maschinengestell (16) elastisch abgestützt ist und am Muldenboden mindestens ein Waschpulsator (54) und/oder mindestens ein Förderpulsator (56) unter dem Waschflüssigkeitsspiegel (38) angreifen.

9. Vorrichtung nach Anspruch 7 oder 8, dadurch gekennzeichnet, daß als Huborgan (20), Waschpulsator (54) und/oder Förderpulsator (56) Hydraulik-bzw. Pneumatikaggregate verwendet sind.

10. Vorrichtung nach Anspruch 9, dadurch gekennzeichnet, daß die Hydraulik-bzw. Pneumatikaggregate Kolben-Zylinder-Einrichtungen sind.

FIG. 1

FIG. 2